(19) Europäisches Patentamt
European Patent Office
Office européen des brevets

(11) EP 1 017 480 B1

(12) **FASCICULE DE BREVET EUROPEEN**

(45) Date de publication et mention de la délivrance du brevet:
**23.10.2002 Bulletin 2002/43**

(21) Numéro de dépôt: **98942773.7**

(22) Date de dépôt: **24.08.1998**

(51) Int Cl.[7]: **B01D 61/38**, C07F 9/53, G21C 19/46, G21F 9/00

(86) Numéro de dépôt international:
**PCT/FR98/01840**

(87) Numéro de publication internationale:
**WO 99/010087 (04.03.1999 Gazette 1999/09)**

# (54) PROCEDE DE SEPARATION D'ACTINIDES ET DE LANTHANIDES PAR TRANSPORT MEMBRANAIRE AU MOYEN D'UN CALIXARENE

VERFAHREN ZUR ABTRENNUNG VON AKTINIDEN UND LANTHANIDEN DURCH MEMBRANTRANSPORT UNTER VERWENDUNG EINES CALIXARENES

METHOD FOR SEPARATING ACTINIDES AND LANTHANIDES BY MEMBRANE TRANSPORT USING A CALIXARENE

(84) Etats contractants désignés:
**BE CH DE ES GB IT LI**

(30) Priorité: **25.08.1997 FR 9710613**

(43) Date de publication de la demande:
**12.07.2000 Bulletin 2000/28**

(73) Titulaire: **Commissariat à l'Energie Atomique**
**75752 Paris Cedex 15 (FR)**

(72) Inventeurs:
- **DELMAU, Laetitia**
  **F-13014 Marseille (FR)**
- **SIMON, Nicole**
  **F-04860 Pierrevert (FR)**
- **DOZOL, Jean-François**
  **F-04660 Pierrevert (FR)**
- **TOURNOIS, Bernard**
  **F-83560 Vinon sur Verdon (FR)**
- **ROUSSIN-BOUCHARD, Christine**
  **F-04200 Sisteron (FR)**
- **BÖHMER, Volker**
  **D-55126 Mainz (DE)**
- **JAKOBI, Ralf, A.**
  **D-66954 Pirmasens (DE)**
- **MOGCK, Oliver**
  **D-55128 Mainz (DE)**
- **TUNAYAR, Abdi**
  **D-55128 Mainz (DE)**

(74) Mandataire: **Des Termes, Monique et al**
**BREVALEX**
**3, rue du Docteur Lancereaux**
**75008 Paris (FR)**

(56) Documents cités:
**WO-A-96/23800** **WO-A-97/17322**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 017 480 B1

## Description

### Domaine technique

La présente invention a pour objet un procédé de séparation des actinides et des lanthanides à partir d'une solution aqueuse les contenant.
De telles solutions peuvent être en particulier des solutions aqueuses provenant d'installations de retraitement de combustibles nucléaires usés, telles que des solutions de dissolution du combustible ou des effluents aqueux.
Elles peuvent être aussi constituées par des solutions aqueuses provenant du traitement des minerais de terres rares, de thorium et/ou d'uranium.
De façon, plus précise, elle concerne la séparation de tels métaux par transport membranaire au moyen de calixarènes.

### Etat de la technique antérieur

Séparation au sein des lanthanides et des actinides

Dans la technique antérieure, on a utilisé des procédés d'extraction liquide-liquide pour séparer les lanthanides entre eux au moyen d'extractants organiques tels que l'acide di(2-éthylhexyl)phosphorique, les amines, les sels d'ammonium quaternaire et le tributyl phosphate, comme il est décrit dans les Techniques de l'Ingénieur J 6630-1 à J6630-8. L'extractant le plus sélectif est l'acide di(2-éthylhexyl)phosphorique qui privilégie l'extraction des lanthanides lourds de rayon ionique plus faible.

Calixarènes substitués par des groupements d'oxyde d'acétamidophosphine

On a aussi envisagé d'utiliser des ligands macrocycliques tels que les calixarènes, pour extraire des actinides et des lanthanides présents dans des solutions aqueuses, comme il est décrit dans le document FR-A-2 729 958.
Les calixarènes utilisés dans ce document répondent à la formule :

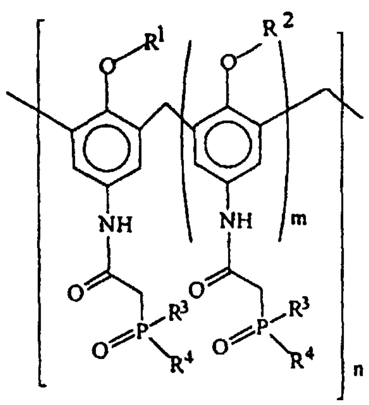

(I)

dans laquelle m est égal à 0 ou 1,

- n est un nombre entier allant de 2 à 8, avec 4 ≤ (m + 1) x n ≤ 8
- $R^1$ et $R^2$ qui peuvent être identiques ou différents, sont des groupes alkyle ou o-nitrophénoxyalkyle, et
- $R^3$ et $R^4$ qui peuvent être identiques ou différents, sont des groupes alkyle ou aryle.

Ces calixarènes peuvent être utilisés pour extraire les actinides et lanthanides à partir de solutions aqueuses provenant du retraitement de combustibles nucléaires usés.
Ils sont fonctionnalisés sur leur bord supérieur par des substituants oxyde d'acétamido phosphine qui présentent une bonne affinité pour les actinides et les lanthanides, et ils sont substitués sur leur bord inférieur par des groupements alkyle ou orthonitrophénoxyalkyle.

Transport membranaire

On peut utiliser ces calixarènes pour extraire les actinides et/ou lanthanides par transport membranaire au travers d'une membrane microporeuse dont les pores sont remplis d'une phase organique comprenant le(s) calixarène (s).

Dans cette phase organique, on utilise comme diluant du (des) calixarène(s), un orthonitrophényl alkyl éther tel que l'ortho-nitrophényl hexyl éther.

Avec ce procédé, on récupère les actinides et/ou lanthanides dans une solution contenant un agent complexant comme l'acide méthylène diphosphonique.

L'emploi d'une telle solution a l'inconvénient d'introduire de nouvelles espèces organiques qui peuvent être gênantes pour la suite des opérations.

Par ailleurs, les phases organiques utilisées ne permettent pas d'assurer dans de bonnes conditions la séparation des actinides et lanthanides entre eux à partir de diverses solutions.

**Exposé de l'invention**

La présente invention a précisément pour objet un procédé d'extraction des actinides et des lanthanides par transport membranaire qui utilise une solution de réextraction plus avantageuse et qui permet par ailleurs de séparer les actinides et lanthanides entre eux, aussi bien à partir de solutions acides que de solutions salines.

Selon l'invention, le procédé pour séparer au moins un métal choisi parmi les actinides et les lanthanides d'une première solution aqueuse, consiste à mettre en contact ladite première solution aqueuse avec l'une des faces d'une membrane microporeuse supportant une phase organique immiscible comprenant au moins un calixarène de formule :

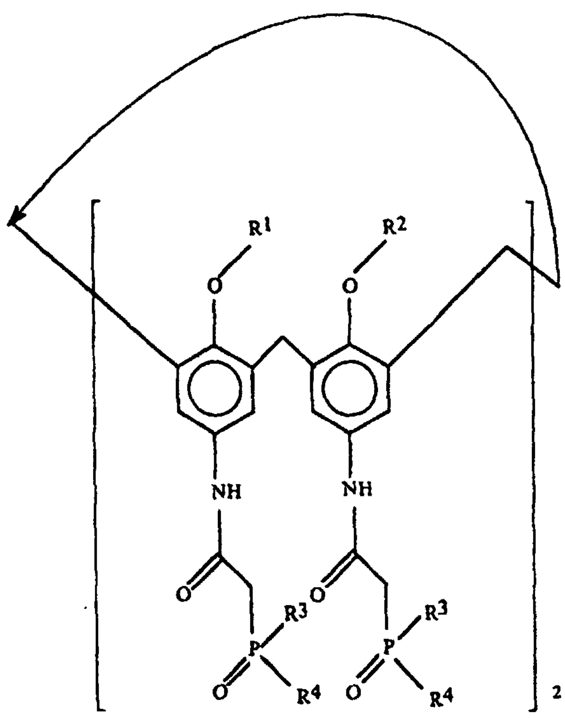

(II)

dans laquelle :

- $R^1$ et $R^2$ qui peuvent être identiques ou différents, sont des groupes alkyle ou o-nitrophénoxyalkyle, et
- $R^3$ et $R^4$ qui peuvent être identiques ou différents, sont des groupes aryle,

et à mettre en contact l'autre face de ladite membrane microporeuse avec une solution aqueuse de réextraction pour transférer le(s) métaux de la première solution aqueuse dans la seconde solution aqueuse de réextraction, la phase organique immiscible étant constituée d'une solution dans un diluant organique dudit ou desdits calixarènes, et la

seconde solution aqueuse de réextraction étant une solution aqueuse d'un acide minéral ayant un pH inférieur ou égal à 4, par exemple une concentration en acide nitrique de $10^{-4}$ à $10^{-1}$ mol/L.

L'emploi d'une solution aqueuse de réextraction constituée par un acide minéral est très avantageuse.

En effet, cette solution est non complexante, elle ne contient pas d'espèce organique gênante, elle est très faiblement concentrée en acide minéral et elle est plus économique que les solutions aqueuses de complexant utilisées dans FR-A-2 729 958.

Dans cette solution aqueuse de réextraction, l'acide minéral peut être en particulier l'acide nitrique ; dans ce cas, une concentration en acide nitrique de $10^{-2}$ mol/L est particulièrement avantageuse.

Pour mettre en oeuvre le procédé de l'invention, on utilise une membrane microporeuse supportant la phase organique immiscible comprenant au moins un calixarène de formule (II).

La membrane microporeuse peut être réalisée en polymère, par exemple en polyéthylène, en polysulfone, en polypropylène, en fluorure de polyvinylidène ou en polytétrafluoroéthylène. On utilise avantageusement une membrane de faible épaisseur, de grande porosité, ayant des pores de petit diamètre. Généralement, la membrane présente une épaisseur de 25 à 100 μm, par exemple de 25 μm, une porosité de 45 à 60 %, de préférence de 45 %, et un rayon moyen de pore de 20 à 1000 nm , de préférence d'environ 40 nm. On peut utiliser en particulier comme membrane microporeuse celle commercialisée sous la marque CELGARD.

Selon l'invention, le diluant organique utilisé pour former la phase organique supportée par la membrane microporeuse est choisi de façon à obtenir une membrane stable permettant de réaliser un transport efficace du ou des métaux dans la solution aqueuse de réextraction légèrement acide.

Pour cet objectif, le diluant doit remplir les conditions suivantes :

- être insoluble dans l'eau,
- ne pas être volatil, et
- présenter une viscosité adaptée au transport et une tension interfaciale avec les phases aqueuses suffisamment élevée, par exemple d'au moins 4 mN/m.

A titre d'exemple de diluants susceptibles d'être utilisés, on peut citer en particulier les alcools lourds, ayant plus de 10 atomes de carbone pour être insolubles dans l'eau, par exemple 10 à 13 atomes de carbone comme l'isotridécanol, et des mélanges d'alcools lourds et d'alkylbenzènes, par exemple un mélange d'isotridécanol et d'hexylbenzène. Le choix de ces diluants organiques permet d'assurer le transport des métaux du groupe des lanthanides et des actinides à partir d'une solution saline ou acide vers la solution aqueuse de réextraction.

On peut aussi utiliser comme diluant des nitro phényl alkyl éthers comme l'ortho-nitrophény hexyl éther mais dans ce dernier cas, il convient d'utiliser une première solution aqueuse saline pour obtenir un transport des actinides et lanthanides dans la solution aqueuse de réextraction.

Dans la phase organique, on peut utiliser les calixarènes sélectionnés parmi ceux décrits dans FR-A-2 729 958. De préférence, on utilise les calixarènes de formule (II) dans laquelle $R^1$ et $R^2$ représentent un groupe alkyle en $C_5$ à $C_{18}$, et $R^3$ et $R^4$ représentent tous deux un groupe phényle.

A titre d'exemple de calixarènes utilisables, on peut citer ceux de formule :

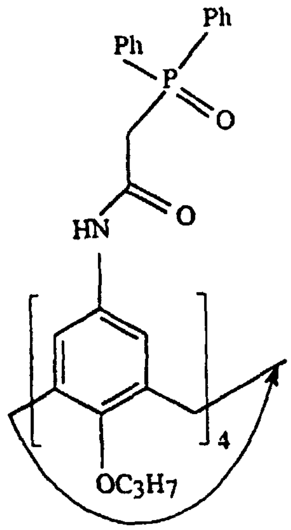

(III)

$A_3^4$

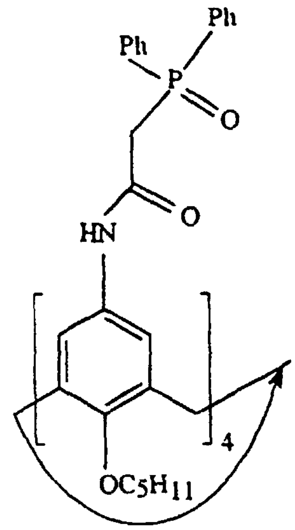

(IV)

$A_5^4$

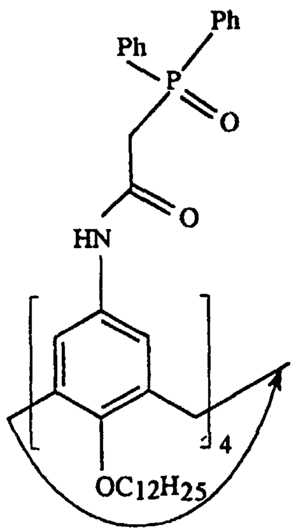

(V)

$A_{12}^4$

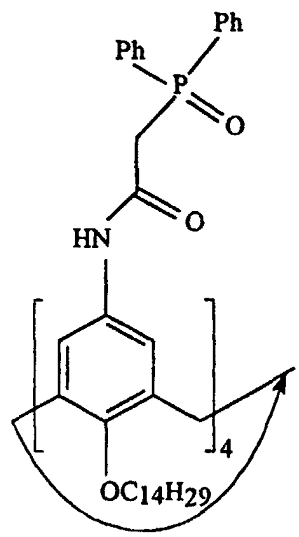

(VI)

$A_{14}^4$

dans lesquelles Ph représente le groupe phényle.

La concentration en calixarène de la phase organique est choisie de façon à obtenir une bonne sélectivité de transport des différents métaux.

Généralement, des concentrations en calixarène de $5.10^{-3}$ à $5.10^{-4}$ mol/L sont appropriées.

Pour préparer la membrane microporeuse supportant la phase liquide organique, on peut tremper la membrane dans une petite quantité de phase ou solution organique en utilisant, par exemple, environ $1,2.10^{-3}$ $cm^3$ de solution par $cm^2$ de membrane, sous un vide primaire, pendant au moins 15 minutes. Après cette opération, on élimine le surplus de solution organique.

Pour mettre en oeuvre le procédé de l'invention, on peut disposer la membrane microporeuse supportant la phase liquide organique dans une enceinte afin de séparer celle-ci en deux compartiments, le premier compartiment

en contact avec l'une des faces de la membrane contenant la première solution aqueuse de métaux à séparer et le second compartiment en contact avec l'autre face de la membrane contenant la seconde solution aqueuse de réextraction.

Le procédé de l'invention peut être utilisé pour séparer les actinides et les lanthanides à partir de solutions aqueuses provenant notamment du retraitement de combustibles nucléaires usés, telles que les solutions de dissolution généralement acides et les effluents aqueux de ces installations qui sont souvent des milieux salins. On peut également utiliser le procédé de l'invention pour séparer les terres rares des concentrés obtenus par lixiviation des minerais de terres rares.

Pour la mise en oeuvre du procédé de l'invention, les membranes microporeuses peuvent être utilisées sous la forme de modules tels que les modules d'ultrafiltration ou de microfiltration, à membranes planes ou à fibres creuses, qui permettent de traiter des débits importants de fluides.

Par ailleurs, il peut être mis en oeuvre pour séparer les métaux du groupe des lanthanides et des actinides entre eux. Dans ce cas, on choisit la composition de la phase organique (diluant, calixarène et concentration en calixarène) de façon à obtenir une perméabilité élevée de la membrane pour le métal à séparer par rapport aux perméabilités de la membrane vis-à-vis des autres métaux. Ainsi, on peut enrichir fortement la seconde solution aqueuse de réextraction en ce métal. Un tel enrichissement peut être de plus augmenté en effectuant plusieurs transports membranaires successifs, c'est-à-dire en soumettant la seconde solution de réextraction obtenue après le premier transport à un second transport membranaire, après avoir ajusté si nécessaire son acidité ou sa salinité pour que l'acidité ou la salinité de cette seconde solution soit identique à celle de la solution de départ.

A titre d'exemple, on peut séparer le curium du terbium en utilisant une phase organique constituée par une solution du calixarène de formule (II) dans laquelle $R^1$ et $R^2$ représentent un groupe alkyle en C5 à C18, et $R^3$ et $R^4$ représentent le groupe phényle, à une concentration de $10^{-3}$ mol/L dans un mélange d'isotridécanol et d'hexylbenzène.

D'autres caractéristiques et avantages de l'invention apparaîtront mieux à la lecture de la description qui suit d'exemples de réalisation donnés bien entendu à titre illustratif et non limitatif, en référence aux dessins annexés.

## Brève description des dessins

La figure 1 représente de façon schématique un dispositif de transport membranaire utilisable pour mettre en oeuvre le procédé de l'invention.

La figure 2 est un graphique illustrant les variations de ln(C/Co) d'un métal à extraire en fonction du temps (en heures) pour Eu, Gd et Tb.

La figure 3 est un graphique représentant l'évolution des quantités de métaux extraits (en %) en fonction du temps (en heures) pour Cm, Pm, Am, Eu, Gd et Tb.

## Exposé détaillé des modes de réalisation

Sur la figure 1, on voit que le dispositif de transport membranaire comprend une enceinte 1 à double enveloppe thermostatée, séparée en deux compartiments 3 et 5 par une membrane microporeuse 6 supportant dans ces pores la phase liquide organique de calixarène 7.

On peut introduire la première solution aqueuse de métaux à séparer dans le compartiment 3 par l'orifice d'alimentation 8, et la solution aqueuse de réextraction dans le compartiment 5 par l'orifice 9. Chaque compartiment est muni d'un agitateur magnétique 10 ou 11 comportant un aimant interne 10a ou 11a et un aimant externe 12 ou 13.

Pour mettre en oeuvre le procédé de l'invention, on introduit dans le compartiment 3 la solution d'alimentation contenant les métaux à séparer et dans le compartiment 5 la solution de réextraction, par exemple une solution aqueuse d'acide nitrique à $10^{-2}$ mol/L. On met en marche l'agitation dans chacun des compartiments, à une vitesse de 800 à 1500 tr/minute, de préférence 1 000 tr/minute. Dans ces conditions, les cations sont sélectivement transportés du compartiment 3 au compartiment 5, et l'on peut suivre la séparation, en déterminant la concentration C d'un cation dans le compartiment 3 à un temps t quelconque et la concentration C' du même cation dans la solution du compartiment 5 à l'instant t.

On a ainsi la relation C = Co-C'où Co est la concentration de la solution d'alimentation en ce même cation au temps t = 0. Pour suivre la concentration d'un cation M dans le compartiment 3, on peut tracer la courbe ln(C/Co)=f(t).

Pour suivre la concentration du cation M dans la solution de réextraction, on trace la courbe ln(C'/Co)=f(t).

La pente a de la droite ainsi obtenue est égale à :

$$a=\frac{Surf*E}{Vol}*P$$

avec Surf représentant la surface de la membrane, E représentant le facteur de porosité de la membrane, Vol représentant le volume de solution dans les compartiments 3 et 5, et P étant la perméabilité, on peut donc en déduire la valeur de la perméabilité P :

$$P=\frac{a^*Vol}{Surf\ ^*E}$$

On obtient une bonne séparation des cations lorsque les perméabilités associées aux cations présents dans la solution d'alimentation sont suffisamment différentes les unes des autres.

Les exemples suivant illustrent différents modes de réalisation de l'invention.

**Exemple 1**

Dans cet exemple, on utilise une membrane microporeuse en polypropylène commercialisée sous le nom CELGARD qui présente les caractéristiques suivantes :

- facteur de porosité : 0,45
- diamètre de pore : 0,04 μm
- épaisseur de la membrane : 25 μm.

Dans cet exemple, les pores de la membrane sont remplis d'un mélange comprenant 75 % en volume d'isotridécanol et 25 % en volume d'hexylbenzène (75:25 en volume) contenant $10^{-3}$ mol/L du calixarène $\mathbf{A}_{12}^{4}$ de formule (V) donnée précédemment. Dans le compartiment 3, on introduit 50 mL d'une solution aqueuse comprenant 4 mol/L de $NaNO_3$ et 0,01 mol/L de $HNO_3$ contenant $10^{-6}$ mol/L d'un métal de terre rare ou d'un métal du groupe des actinides. Le compartiment 5 contient 50 mL d'une solution d'acide nitrique à $10^{-2}$ mol/L.

On soumet les solutions à une agitation à 1 000 tr/min et on détermine l'activité de la solution aqueuse de réextraction du compartiment 5 par scintillation liquide ou par spectrométrie $\alpha$ ou $\gamma$, en fonction du temps. A partir des résultats obtenus, on détermine la perméabilité P de la membrane vis-à-vis de l'élément à extraire en utilisant la formule donnée ci-dessus. Les perméabilités obtenues pour Cm, Am, Pm, Eu, Gd et Tb sont données dans le tableau 1 annexé.

Au vu de ce tableau, on remarque que la perméabilité de la membrane pour le curium est très élevée par rapport à sa perméabilité pour le terbium, ce qui permet de séparer le curium du terbium dans de bonnes conditions.

**Exemple 2**

Dans cet exemple, on suit le même mode opératoire que dans l'exemple 1, mais on utilise comme diluant de l'isotridécanol au lieu du mélange isotridécanol-hexylbenzène, et le calixarène $\mathbf{A}_{5}^{4}$ de formule (IV) donnée ci-dessus. Les résultats obtenus sont donnés dans le tableau 1.

Ainsi, on remarque que les perméabilités sont plus élevées avec ce diluant qu'avec celui de l'exemple 1. On observe également une sélectivité entre les cations.

**Exemple 3**

Dans cet exemple, on suit le même mode opératoire que dans l'exemple 1, mais on utilise comme diluant l'ortho-nitro phényl hexyl éther (NPHE) au lieu du mélange isotridécanol-hexyl benzène et le calixarène $\mathbf{A}_{14}^{4}$ de formule (VI) donnée ci-dessus. Les résultats obtenus sont donnés dans le tableau 1.

Au vu de ce tableau, on remarque que les perméabilités sont du même ordre que celles de l'exemple 1 où l'on utilisait comme diluant un mélange d'isotridécanol et d'hexylbenzène.

**Exemple 4**

Dans cet exemple, on suit le même mode opératoire que dans l'exemple 1, mais la solution aqueuse de départ est une solution d'acide nitrique à 3 mol/L de $HNO_3$ contenant $10^{-6}$ mol/L du métal à extraire. Les résultats obtenus sont donnés dans le tableau 1. Les perméabilités sont plus faibles que dans l'exemple 1 mais on retrouve une sélectivité entre les métaux.

**Exemple 5**

On suit le même mode opératoire que dans l'exemple 1, mais la concentration en métal de la solution d'alimentation est de $10^{-3}$ mol/L au lieu d'être de $10^{-6}$ mol/L. Les résultats obtenus sont donnés dans le tableau 2. Ils sont

donnés en terme de flux ou de pourcentage d'extraction car les perméabilités ne sont plus définies pour les fortes concentrations en métal (tableau 2).

Dans ce cas, les éléments Eu, Gd, Tb ne sont plus en traces vis-à-vis du calixarène, mais on n'observe pas de saturation de la membrane. On retrouve une sélectivité entre les éléments.

**Exemple 6 : séparation de l'europium.**

Dans cet exemple, on sépare l'europium d'une solution aqueuse comprenant :

$HNO_3$ : 1 mol/L
$NaNO_3$ : 4 mol/L
Eu : $10^{-6}$ mol/L

On réalise la séparation de l'europium par transport membranaire en utilisant la même membrane microporeuse que dans l'exemple 1 et une phase organique constituée d'un mélange d'isotridécanol et d'hexybenzène (75 : 25 en volume) comprenant $10^{-3.}$ mol/L du calixarène $\mathbf{A}_{14}^{4}$ de la formule (VI) . Le deuxième compartiment contient une solution d'acide nitrique à $10^{-2}$ mol/L de $HNO_3$.

La figure 2, courbe référencée Eu, illustre les résultats obtenus dans ces conditions, soit les variations de ln $(C/C_0)$ de l'europium en fonction du temps (en heures). On rappelle que C est la concentration en europium à l'instant t et $C_o$ est la concentration en europium de la solution d'alimentation.

**Exemples 7 et 8 : séparation du gadolinium et du terbium.**

On suit le même mode opératoire que dans l'exemple 6, pour séparer le gadolinium et le terbium à partir d'une solution aqueuse de même composition que celle de l'exemple 6 comprenant $10^{-6}$ mol/L de gadolinium ou de terbium. Les résultats obtenus sont représentés par les courbes référencées Tb (terbium) et Gd (gadolinium) de la figure 2. Si l'on compare les courbes de la figure 2, on remarque que l'europium est transporté plus efficacement que le gadolinium et le terbium. On peut donc envisager une séparation de ces terres rares avec le procédé de l'invention.

**Exemple 9**

Dans cet exemple, on évalue l'efficacité du transport membranaire pour séparer les métaux suivants : Pm, Eu, Gd, Tb, Am et Cm présents dans une solution aqueuse d'alimentation contenant $10^{-6}$ mol/L de chacun de ces nitrates de lanthanide ou d'actinide, $10^{-2}$ mol/L de $HNO_3$ et 4 mol/L de $NaNO_3$. On utilise la même membrane que dans l'exemple 1 et la phase organique est constituée d'un mélange de 75 % en volume d'isotridécanol et de 25 % en volume d'hexylbenzène comprenant $10^{-3}$ mol/L du calixarène $\mathbf{A}_{5}^{4}$ de formule (IV). La solution de réextraction est une solution à $10^{-2}$ mol/L de $HNO_3$. Les résultats obtenus dans ces conditions sont donnés sur la figure 3, qui représente pour chaque cation, le pourcentage de cation extrait en fonction du temps (en heures).

Sur cette figure, on remarque que Cm, Pm et Am sont transportés plus rapidement que les cations Eu, Gd et Tb. On peut donc réaliser une séparation efficace entre ces éléments par transport membranaire.

En effet, après 2,5 heures de transport, les pourcentages des cations extraits sont les suivants :

Pm : 61,3 %
Eu : 25,9 %
Gd : 13,7 %
Tb : 9,0 %
Am : 48,1 %
Cm : 80,7 %

La phase de réextraction contient donc 8,9 fois plus de Cm que de Tb. On recommence alors l'opération de transport membranaire à partir de cette phase de réextraction après y avoir ajouté du nitrate de sodium en quantité suffisante pour se placer dans les mêmes conditions que celles de la solution de départ, soit 4 mol/L de $NO_3$. Dans ces conditions, le pourcentage des cations présents dans la solution de réextraction obtenue après le second transport membranaire sont par rapport à la première solution d'alimentation :

Pm : 37 %
Eu : 6,7 %
Gd : 1,9 %

Tb : 0,8 %
Am : 23,1 %
Cm : 65,1 %

On remarque ainsi que la solution de réextraction obtenue après le second transport membranaire contient 80 fois plus de curium que de terbium.

On obtient donc un enrichissement très important dès le second transport membranaire.

Tableau 1

| | | | | Perméabilité(cm/h) | | | | | | |
|---|---|---|---|---|---|---|---|---|---|---|
| Ex. | Alimentation | Diluant | Calixarène | Métal | Am | Cm | Pm | Eu | Gd | Tb |
| | | | | rayon ionique (Å) | 0,975 | 0,970 | 0,970 | 0,947 | 0,938 | 0,923 |
| 1 | Milieu salin* | Isotridécanol : 75 %<br>Hexylbenzène : 25 % | $A^4_{12}$ ($10^{-3}$ mol/L) | Concentration de $10^{-6}$ mol/L | 3.1 | 6.0 | 2.9 | 1.4 | 0,93 | 0,59 |
| 2 | " | Isotridécanol | $A^4_5$ ($10^{-2}$mol/L) | " | | | 16.8 | 9.2 | 8.1 | 7.2 |
| 3 | " | Orthonitrophényl hexyl éther | $A^4_{14}$ ($10^{-3}$ mol/L) | " | | | 3.0 | 1.8 | 1.1 | 0.78 |
| 4 | HNO33M | Isotridécanol : 75 %<br>Hexylbenzène : 25 % | $A^4_{12}$ ($10^{-3}$ mol/L) | " | 0.27 | 0.15 | 0,2 | 0,12 | 0,086 | 0,064 |

*Milieu salin : $NaNO_3$ 4M ; $HNO_3$ 0,01 M.

Tableau 2

| Eléments | Pm | Eu | Gd | Tb |
|---|---|---|---|---|
| Flux ($mol.h^{-1}\ cm^{-2}$) | $5.10^{-14}$ | $1,2.10^{-8}$ | $8,5.10^{-9}$ | $6,3.10^{-9}$ |
| % transporté en 3 jours | 15 % | 8,4 % | 6,0 % | 4,3 % |

## Revendications

1. Procédé pour séparer au moins un métal choisi parmi les actinides et les lanthanides d'une première solution aqueuse, selon lequel on met en contact ladite première solution aqueuse avec l'une des faces d'une membrane microporeuse supportant une phase organique immiscible comprenant au moins un calixarène de formule :

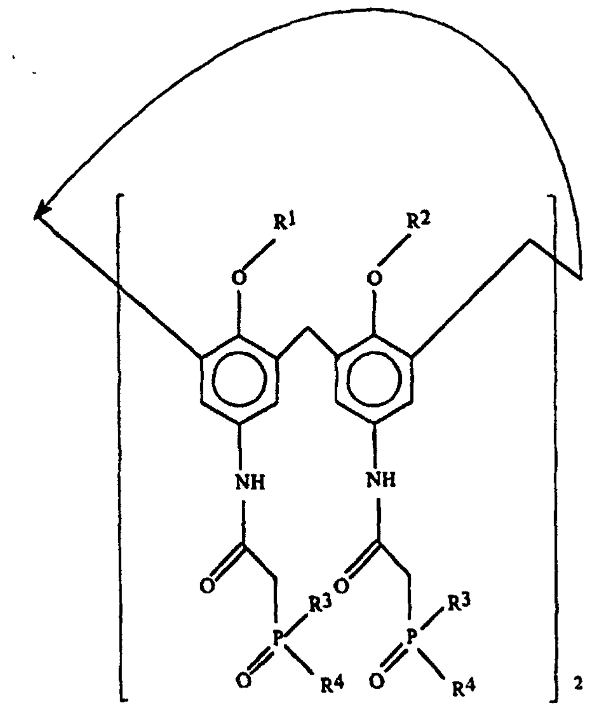

(II)

dans laquelle :

- $R^1$ et $R^2$ qui peuvent être identiques ou différents, sont des groupes alkyle ou o-nitrophénoxyalkyle, et
- $R^3$ et $R^4$ qui peuvent être identiques ou différents, sont des groupes aryle,

et l'on met en contact l'autre face de ladite membrane microporeuse avec une solution aqueuse de réextraction pour transférer le(s) métaux de la première solution aqueuse dans la seconde solution aqueuse de réextraction, la phase organique immiscible étant constituée d'une solution dans un diluant organique dudit ou desdits calixarènes, et la seconde solution aqueuse de réextraction étant une solution aqueuse d'un acide minéral ayant un pH inférieur ou égal à 4.

2. Procédé selon la revendication 1, dans lequel la seconde solution aqueuse de réextraction est une solution aqueuse d'acide minéral ayant une concentration en acide de $10^{-4}$ à $10^{-1}$ mol/L.

3. Procédé selon la revendication 2, dans lequel l'acide est l'acide nitrique.

4. Procédé selon l'une quelconque des revendications 1 à 3, dans le diluant organique est un alcool lourd ou un mélange d'alcool lourd et d'alkylbenzène.

5. Procédé selon la revendication 4 dans lequel le diluant est l'isotridécanol ou un mélange d'isotridécanol et d'hexylbenzène.

6. Procédé selon la revendication 1 ou 3, dans lequel le diluant organique est l'ortho-nitrophénylhexyl éther et la première solution aqueuse est une solution saline.

7. Procédé selon l'une quelconque des revendications 1 à 6, dans lequel la concentration en calixarène(s) de la phase organique est de $5.10^{-4}$ à $5.10^{-3}$ mol/L.

**8.** Procédé selon l'une quelconque des revendications 1 à 4, dans lequel le calixarène répond à la formule (II) dans laquelle $R^1$ et $R^2$ représentent un groupe alkyle en C5 à C18, et $R^3$ et $R^4$ représentent le groupe phényle.

**9.** Procédé selon la revendication 1, 4 ou 5, dans lequel la première solution aqueuse est une solution acide ou saline.

**10.** Procédé selon la revendication 1 pour séparer au moins un métal du groupe des actinides et lanthanides d'au moins un autre métal de ce groupe, dans lequel on choisit le diluant, le calixarène et la concentration en calixarène de la phase organique pour obtenir une perméabilité de la membrane vis-à-vis du (des) métaux à séparer plus élevée que celles du (des) autre(s) métaux.

**11.** Procédé selon la revendication 10, dans lequel le métal à séparer est le curium, l'autre métal est le terbium et la phase organique est une solution du calixarène de formule (II) dans laquelle $R^1$ et $R^2$ représentent un groupe alkyle en C5 à C18, et $R^3$ et $R^4$ représentent le groupe phényle, à une concentration de $10^{-4}$ à $5.10^{-3}$ mol/L dans un mélange d'isotridécanol et d'hexyl benzène.

**Patentansprüche**

**1.** Verfahren zur Trennung mindestens eines unter den Actinoiden und den Lanthanoiden gewählten Metalls von einer ersten wässrigen Lösung, nach dem man die genannte erste wässrige Lösung in Kontakt bringt mit einer der Oberflächen einer mikroporösen Membran, die eine nicht mischbare organische Phase unterstützt, welche wenigstens ein Calixaren der Formel:

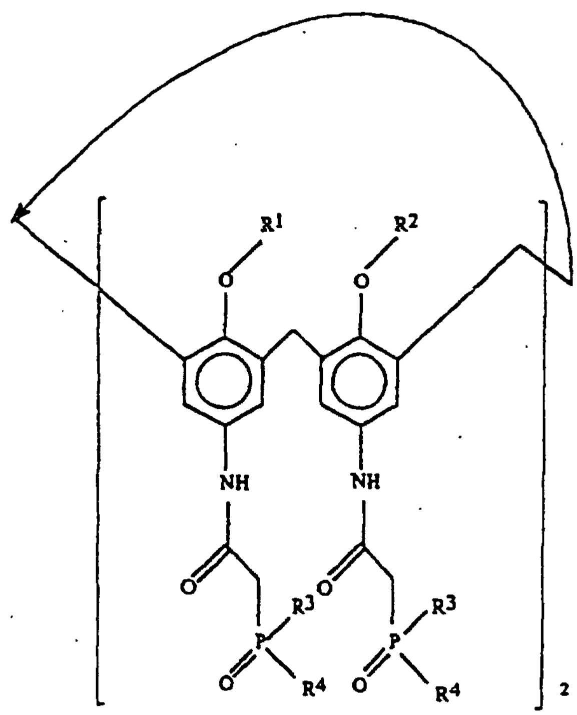

(II)

enthält, worin:

- $R^1$ und $R^2$, die identisch oder verschieden sein können, Alkyl- oder o-Nitrophenoxyalkylgruppen sind und
- $R^3$ und $R^4$, die identisch oder verschieden sein können, Arylgruppen sind,

und man die andere Oberfläche der genannten mikroporösen Membran in Kontakt bringt mit einer der Reextraktion dienenden wässrigen Lösung, um das oder die Metalle von der ersten wässrigen Lösung in die der Reextraktion dienende zweite wässrige Lösung zu überführen, wobei die nicht mischbare organische Phase aus einer Lösung des oder der genannten Calixarene in einem organischen Verdünnungsmittel besteht und die der Reextraktion dienende zweite wässrige Lösung eine wässrige Lösung einer Mineralsäure ist, die einen pH kleiner

als oder gleich 4 hat.

**2.** Verfahren nach Anspruch 1, in welchem die zweite wässrige Reextraktionslösung eine wässrige Lösung einer Mineralsäure ist, die eine Säurekonzentration von $10^{-4}$ bis $10^{-1}$ mol/l hat.

**3.** Verfahren nach Anspruch 2, in welchem die Säure Salpetersäure ist.

**4.** Verfahren nach einem der Ansprüche 1 bis 3, in welchem das organische Verdünnungsmittel ein schwerer Alkohol oder eine Mischung von schwerem Alkohol und Alkylbenzol ist.

**5.** Verfahren nach Anspruch 4, in welchem das Verdünnungsmittel Isotridecanol oder eine Mischung von Isotridecanol und Hexylbenzol ist.

**6.** Verfahren nach Anspruch 1 oder 3, in welchem das organische Verdünnungsmittel o-Nitrophenylhexylether ist und die erste wässrige Lösung eine Salzlösung ist.

**7.** Verfahren nach einem der Ansprüche 1 bis 6, in welchem die Konzentration der organischen Phase an Calixaren (en) $5.10^{-4}$ bis $5.10^{-3}$ mol/l beträgt.

**8.** Verfahren nach einem der Ansprüche 1 bis 4, in welchem das Calixaren der Formel (II) entspricht, in welcher $R^1$ und $R^2$ eine $C_5$- bis $C_{18}$-Alkylgruppe darstellen und $R^3$ und $R^4$ die Phenylgruppe darstellen.

**9.** Verfahren nach Anspruch 1, 4 oder 5, in welchem die erste wässrige Lösung eine Säure- oder Salzlösung ist.

**10.** Verfahren nach Anspruch 1 zur Trennung mindestens eines Metalls der Gruppe der Actinoide und Lanthanoide von mindestens einem anderen Metall dieser Gruppe, in welchem man das Verdünnungsmittel, das Calixaren und die Konzentration an Calixaren der organischen Phase wählt, um eine Permeabilität der Membran gegenüber dem oder den zu trennenden Metallen zu erhalten, die höher ist als die gegenüber dem oder den anderen Metallen.

**11.** Verfahren nach Anspruch 10, in welchem das zu trennende Metall Curium ist, das andere Metall Terbium ist und die organische Phase eine Lösung des Calixarens der Formel (II), in welcher $R^1$ und $R^2$ eine $C_5$- bis $C_{18}$-Alkylgruppe darstellen und $R^3$ und $R^4$ die Phenylgruppe darstellen, in einer Konzentration von $10^{-4}$ bis $5.10^{-3}$ mol/l in einer Mischung von Isotridecanol und Hexylbenzol ist.

## Claims

**1.** Process for separating at least one metal chosen from among the actinides and lanthanides from a first aqueous solution, according to which the aforesaid first aqueous solution is put in contact with one of the sides of a microporous membrane bearing an immiscible organic phase containing at least one calixarene of formula:

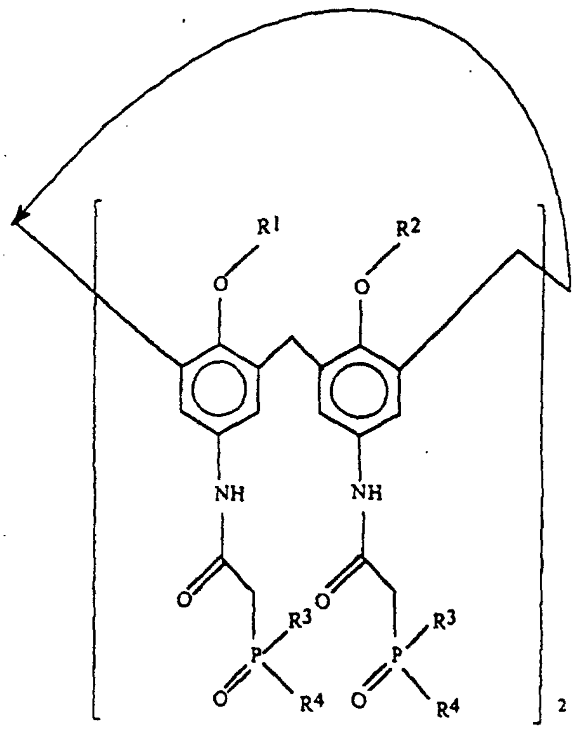

(II)

in which:

- $R^1$ and $R^2$ which can be identical or different, are alkyl or o-nitrophenoxyalkyl groups, and
- $R^3$ and $R^4$ which can identical or different, are aryl groups,

and the other side of the aforesaid microporous membrane is put into contact with an aqueous re-extraction solution to transfer the metal(s) of the first aqueous solution into the second aqueous re-extraction solution, the immiscible organic phase being composed of a solution of the aforesaid calixarene(s) in an organic diluent, and the second aqueous re-extraction solution being an aqueous solution of a mineral acid with a pH less than or equal to 4.

**2.** Process according to claim 1, in which the second aqueous re-extraction solution is an aqueous solution of a mineral acid with an acid concentration of $10^{-4}$ to $10^{-1}$ mol/L.

**3.** Process according to claim 2, in which the acid is nitric acid.

**4.** Process according to any of claims 1 to 3, in which the organic diluent is a heavy alcohol or a mixture of a heavy alcohol and alkylbenzene.

**5.** Process according to claim 4 in which the diluent is isotridecanol or an mixture of isotridecanol and hexylbenzene.

**6.** Process according to claim 1 or 3, in which the organic diluent is ortho-nitro-phenylhexyl ether and the first aqueous solution is a saline solution.

**7.** Process according to any of claims 1 to 6, in which the concentration of calixarene(s) in the organic phase is $5 \cdot 10^{-4}$ mol/L to $5 \cdot 10^{-3}$ mol/L.

**8.** Process according to any of claims 1 to 4, in which the calixarene corresponds to formula (II) in which $R^1$ and $R^2$ represent an alkyl group with C5 to C18 and $R^3$ and $R^4$ represent the phenyl group.

**9.** Process according to claim 1, 4 or 5, in which the first aqueous solution is an acid or saline solution.

**10.** Process according to claim 1 to separate at least one metal of the group of lanthanides and actinides from at least one other metal of this group, in which the diluent, calixarene and calixarene concentration of the organic phase

are chosen to obtain a permeability of the membrane with respect to the metal(s) to be separate which is higher than that of the other metals.

**11.** Process according to claim 10, in which the metal to be separated is curium, the other metal is terbium and the organic phase is a solution of formula (II) calixarene, in which $R^1$ and $R^2$ represent an alkyl group with C5 to C18 and $R^3$ and $R^4$ represent the phenyl group, with a concentration of $10^{-4}$ to $5.10^{-3}$ mol/L in a mixture of isotridecanol and hexyl benzene.

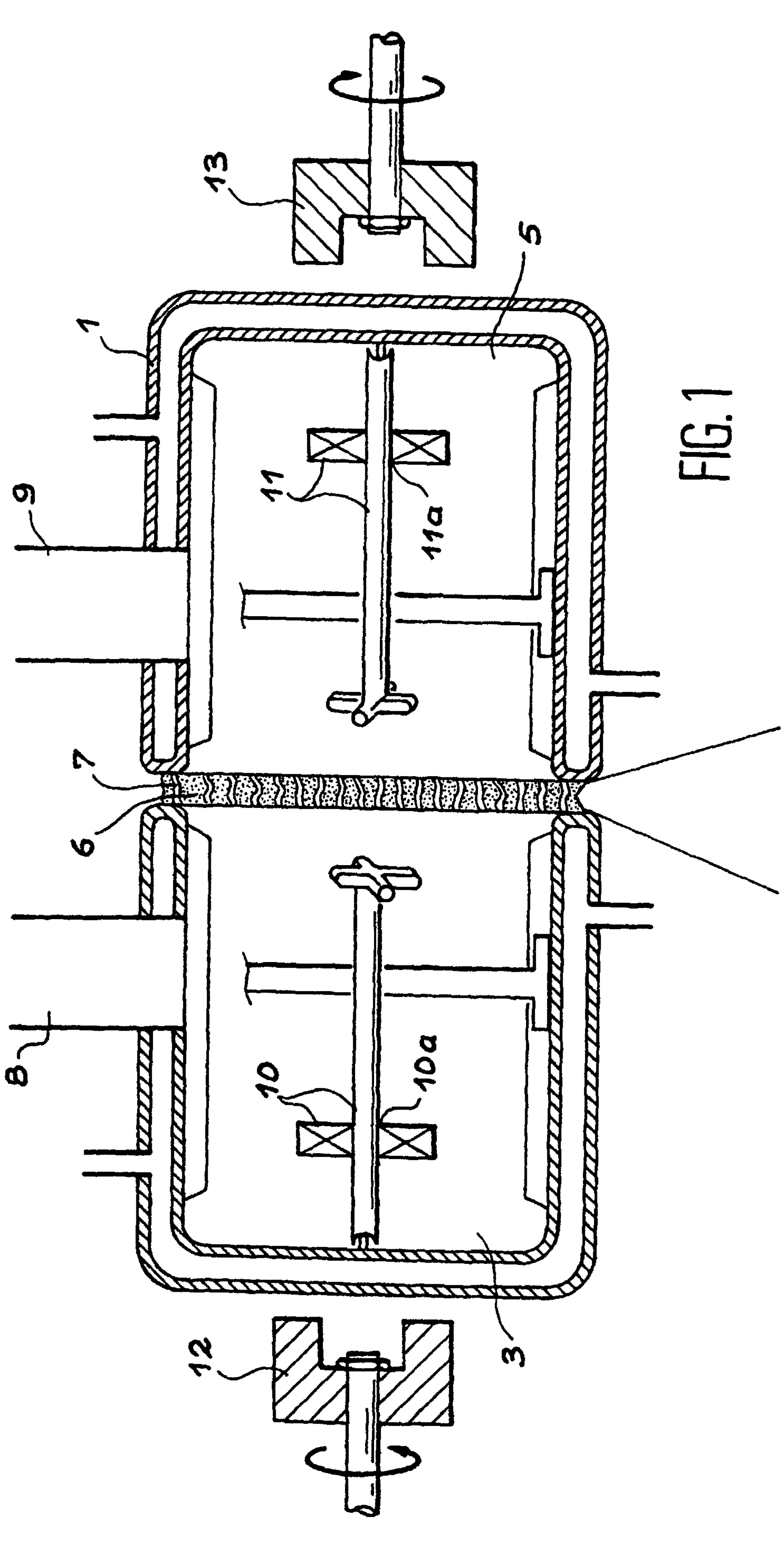


FIG. 1

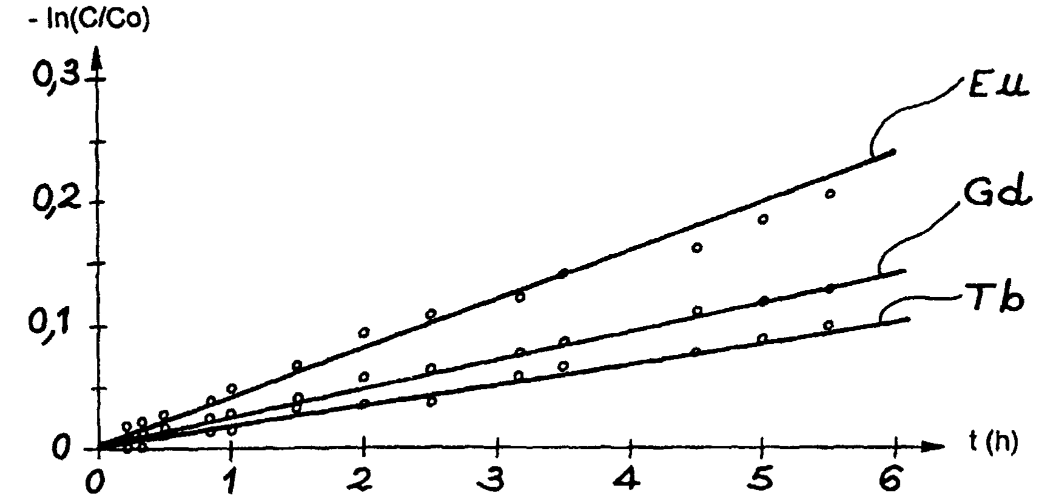
- ln(C/Co)
0,3
0,2
0,1
0
0
1
2
3
4
5
6
t (h)
Eu
Gd
Tb

FIG. 2

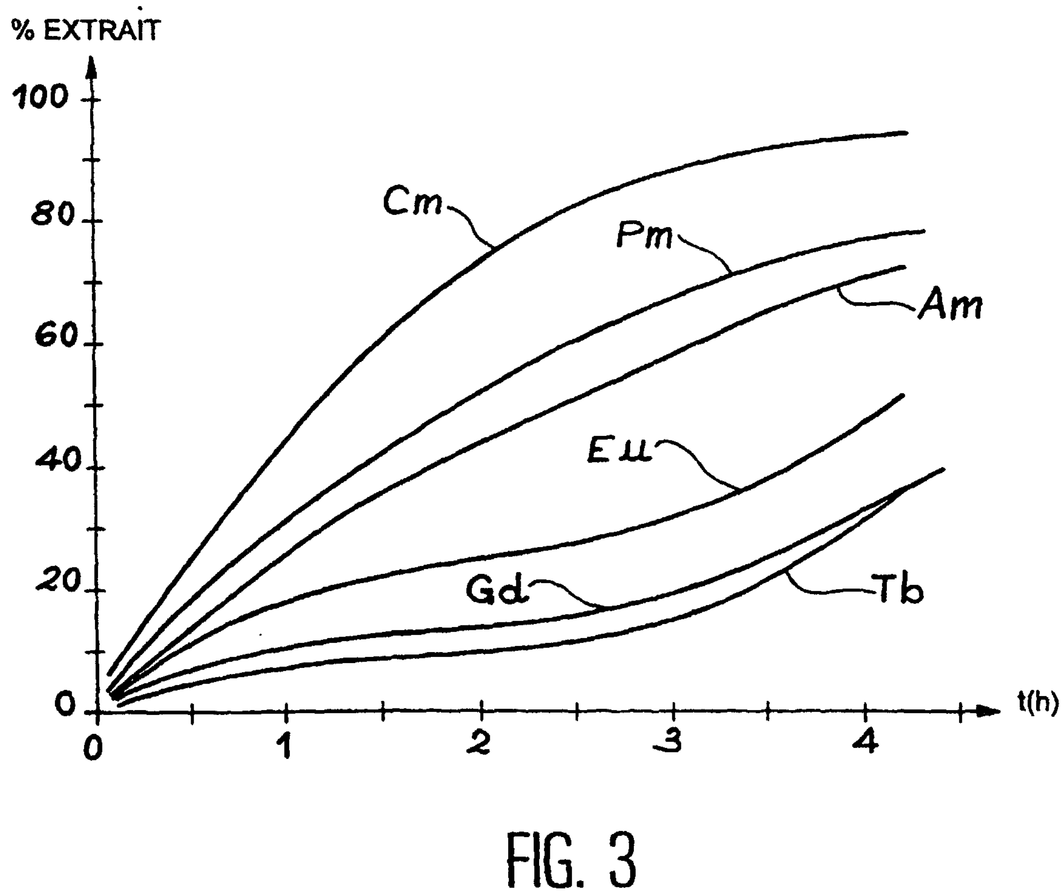
% EXTRAIT
100
80
60
40
20
0
0
1
2
3
4
t(h)
Cm
Pm
Am
Eu
Gd
Tb

FIG. 3